(19) **Europäisches Patentamt European Patent Office Office européen des brevets**

(11) **EP 1 162 764 B1**

(12) **EUROPEAN PATENT SPECIFICATION**

(45) Date of publication and mention
of the grant of the patent:
**15.08.2007 Bulletin 2007/33**

(51) Int Cl.:
*H04B 7/15* (2006.01)     *H01Q 3/46* (2006.01)

(21) Application number: **00112092.2**

(22) Date of filing: **05.06.2000**

(54) **Indoor wireless system using active reflector**

Drahtloses Innenraumsystem mit aktivem Reflektor

Système de communication sans fil d'intérieur utilisant un réflecteur actif

(84) Designated Contracting States:
**AT BE CH CY DE DK ES FI FR GB GR IE IT LI LU MC NL PT SE**

(43) Date of publication of application:
**12.12.2001 Bulletin 2001/50**

(60) Divisional application:
**07110884.9**

(73) Proprietor: **Sony Deutschland GmbH**
**10785 Berlin (DE)**

(72) Inventors:
• **Oberschmidt, Gerald,**
**Sony Intern.(Europe) GmbH**
**70327 Stuttgart (DE)**
• **Brankovic, Veselin,**
**Sony Intern.(Europe) GmbH**
**70327 Stuttgart (DE)**
• **Krupezevic, Dragan,**
**c/o Sony Intern. (Europe) GmbH**
**70327 Stuttgart (DE)**
• **Konschak, Tino,**
**c/o Sony Intern. (Europe) GmbH**
**70327 Stuttgart (DE)**
• **Dölle, Thomas,**
**c/o Sony Intern. (Europe) GmbH**
**70327 Stuttgart (DE)**

(74) Representative: **Körber, Martin Hans et al**
**Mitscherlich & Partner**
**Patentanwälte**
**Sonnenstrasse 33**
**80331 München (DE)**

(56) References cited:
EP-A- 0 302 455     EP-A- 0 506 457
EP-A- 0 515 728     EP-A- 0 920 074
WO-A-89/06459     JP-A- 8 223 172
JP-A- 60 117 833     JP-A- 61 046 632
US-A- 5 509 028

**Description**

The present invention relates to a high data rate wireless transmission system for indoor applications operating in the upper microwave, mm-wave range, and/or in the infrared region.

With the increasing number of digitally controllable electric and electronic devices, and the possibility to turn a big variety of portable or handhold electronic equipment, like e.g. Palmtops or recently developed cellular phones, into a personal control centre, a growing need for low cost high data rate wireless data communication systems for interconnecting mobile electronic equipment of different purposes such as PC, printer, TV set, VCR, digital cameras or other non-stationary devices evolved.

High data rate wireless transmission systems for indoor applications require large bandwidths available in the infrared region, the higher microwave, and the mm-wave range, like e.g. in regions from 15GHz throughout 60 GHz and higher frequencies. Line of sight connection between transmitter and receiver is generally required for higher frequencies, but is often difficult to establish when people move around, thus passing through the connection path or when future changes in the environment and/or the arrangement of the terminal stations have to be taken into account or when the terminals themselves are mobile. In home or office environments a low cost approach for interconnecting electronic equipment also implies renunciation of any additional installation effort, as will be involved with setting up a broadband cabling infrastructure for interconnecting base stations with a main processing unit. To avoid high signal attenuation at the rim of the receiving zone jeopardising the system performance, the radiation characteristic of the linking device has to compensate for the physical attenuation of the signal increasing with the distance between transmitter and receiver.

The problem to ensure line of sight for high frequency signal propagation is solved in the state of the art by either placing the RF-repeater high, in indoor environments at the ceiling, above the mobile units, or to establish a chain of RF-repeaters to guide the signal around obstacles. Another approach, as in US 5,603,080, is a conversion of the signal to lower frequencies, which require no line of sight for propagation, and then reconvert the signal to the original frequency, before it is submitted to the mobile unit.

Known wireless data transmission systems as disclosed in US 5,812,933 and in US 5,890,055 provide a radio link between the mobile terminal stations and a basestation, which acts as a gateway for communication between the fixed and the wireless network. The main drawback of those systems is that they require cost effective baseband processing units which depend on a broadband cabling infrastructure for being interconnected between themselves and with a main processing unit. The same is true for the indoor wireless communication system disclosed in EP 0833 403 A2, where an active repeater establishes an indirect line of sight between cordless phones and their respective basestations for extending their range within a building.

WO 89/06459 discloses an optical wireless data communication system with a plurality of terminals and several optical repeaters. Hereby, each of the repeaters has internal elements to inhibit the retransmission of a received signal back to the repeater from which the received signal was transmitted. Additionally, each repeater comprises baseband processing functionalities.

The object of the present invention is to provide an active reflector which can be manufactured at low cost and which is as simple as possible in order to reduce maintenance necessities while additionally reducing multi-path effects.

The above object is achieved by an active reflector according to independent claim 1. The present invention is further directed to a wireless data communication system according to claim 12, comprising at least one active reflector of the present invention.

The active reflector of the present invention works basically like a mirror for high frequency signals, providing indirect line of sight for direct data transmission between the terminals within the cell. Therefore no cost-intensive baseband processing unit and/or broadband cabling infrastructure is necessary, so that a simple and cost-effective indoor communication is enabled. The specific polarisation of the antennas reduces multipath effects.

Advantageous features of the present invention are defined in subclaims.

Signals received from the mobile terminals are advantageously processed before being transmitted back. Basically signal processing consists of amplification in a gain block to reduce the chance of a broken communication link, whereby the gain block may be built-up from several sub-gain blocks, any of which may be switched off to provide a means for simple automatic gain control. An optional filtering unit will restore the original signal.

Active reflectors may also work in the manner to scale the frequency. In that case the system is set as a Frequency Division Duplex (FDD) system.

To avoid weak signals for mobile terminals located at the far ends of the range of the active reflector, and/or that signal power is wasted for directions where no terminals exist, and/or that the signals disturb other active reflectors, the antennae of the active reflector are preferably sectored antennae with uniform power coverage pattern. Specific polarisation combinations reduce multipath effects.

The signal processing unit of the active reflector may additionally comprise a frequency translating unit, so that the frequency or channel of the received signal is changed before it is transmitted. This enables a better distinction between input and output and thus avoids closed feedback loops in the circuit of the active reflector.

Further on, active reflectors may be equipped with an additional means for wireless communication between each other, in order to transfer data from the sector of a first active reflector to the sector of second active reflector. Preferably a pencil beam type link is used to reduce interference.

For easy set-up and availability of electrical power, the active reflector is preferably located at the positions of the lights and directly connected to their power outlets. As a main advantage of higher frequencies not only the available bandwidth increases, as a second advantage the geometrical size for the antennae decreases due to the smaller wavelength, thus allowing to realise a device with acceptable dimensions that can be integrated in an indoor artificial lighting system.

In the following description, the present invention is explained by means of advantageous embodiments in view of respective drawings, of which

Figure 1 shows the scenario of the proposed high data rate indoor communication system,
Figure 2 is a block diagram of the active reflectors functional blocks,

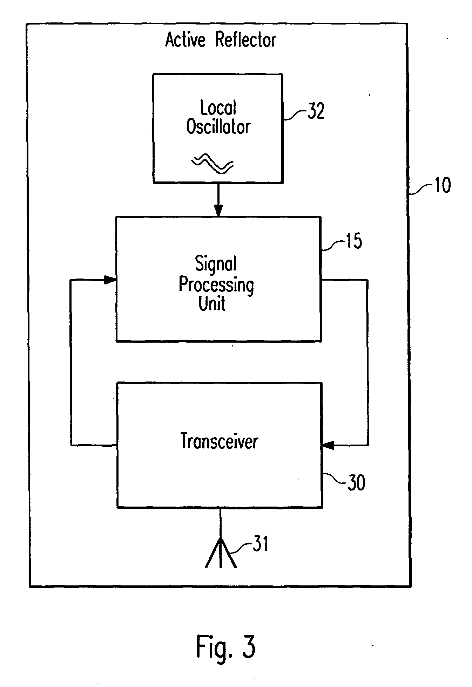

Figure 3 shows the functional blocks of an active reflector with one common antenna working in FDD mode,
Figure 4 presents the ideal radiation pattern of the Rx/Tx antennae of the active reflector providing a uniform cell coverage pattern,
Figure 5 depicts the geometrical set-up for an example,
Figure 6 shows a block diagram of the functional units of an active reflector with extended functionality, and
Figure 7 shows the active reflector of the present invention integrated into a usual object used for providing artificial light in indoor environments.

In the drawings like elements are assigned like reference numerals.

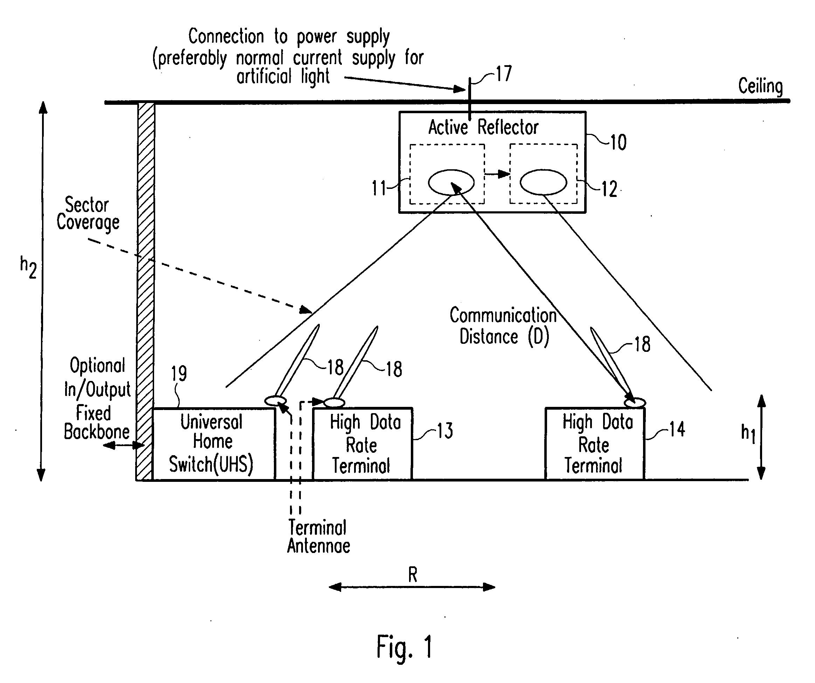

An example of the proposed high data rate indoor communication system deploying an active reflector (10) in accordance with the present invention is schematically shown in Figure 1. The active reflector contains a receiving section (11) for receiving signals from a first mobile terminal (13), and a transmitting section (12) for transmitting the received signals to a second mobile terminal (14) in an omni-directional way. No baseband processing is necessary for this system. This configuration grants every mobile terminal direct access to every other mobile terminal within the reach of the active reflector (10). The active reflector establishes a communication link even, when there is no direct line of sight connection between the two mobile terminals, which is necessary for a radio link at the very high frequencies necessary for data communication at high transmission rates.

The active reflector (10) does in no way influence the logical set-up of the data communication system, it merely forwards signals from one data terminal to another data terminal which cannot communicate directly due to possible obstacles within the communication path. The active reflector (10) is placed at a position in the room that guarantees a line of sight connection to every mobile high data rate terminal of the system. Preferably the active reflector (10) is mounted above the mobile terminals (13, 14), most preferably at the ceiling of an office or a room in a home environment.

Because the active reflector (10) works as a wireless mediator between the connected mobile terminals (13, 14) it is completely autonomous with the one exception of having to be connected to an external power supply. Advantageously, a power outlet (17) for the indoor artificial lighting system is used as a power connector for the active reflector (10). Thereby, no additional installation effort is necessary to put the active reflector (10) into action.

In the preferred embodiment all mobile electronic equipment terminals are equipped with a wireless transceiver entity working in the millimetre wave or infrared region. The emitting devices of the transceiver as well as its receiving devices should have a radiation characteristic which only illuminates the upper half plane, namely the ceiling, where preferably higher antenna directivity for the terminal side is assumed. Having as those antennas with higher gain the system may reduce problems of multipath propagation. To give the mobile terminals access to a stationary high speed data processing facility, a base station, a hub or a universal home switch can be used as a terminal (19) within such a communication system, to provide an optional I/O port to a fixed backbone network.

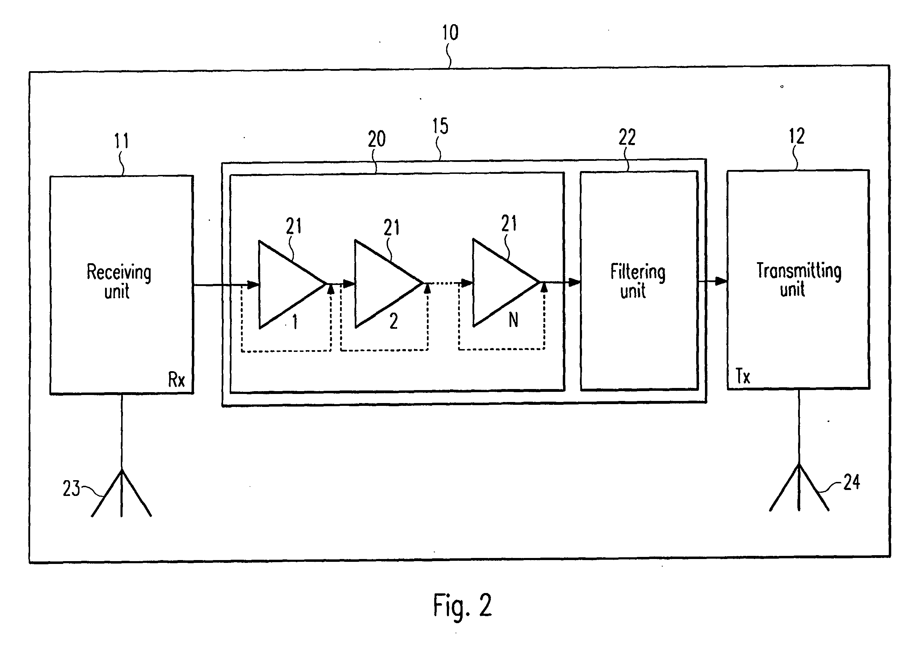

A block diagram of the components of a preferred embodiment of an active reflector is shown in Figure 2. Signals from the mobile terminals are collected by an antenna (23) and processed in the receiving unit (11). Before being passed on to the transmitting unit (12), the signals are being amplified and filtered in the signal processing unit (15). The signal processing unit (15) contains a gain block (20) and a filtering unit (22) wherein the signals are being filtered before handed over to the transmitting unit of the active reflector and finally emitted back to the mobile terminals (13, 14) by the antenna (24). In this example the gain block (20) is an assembly of N sub-gain blocks (21), where either one or a combination of sub-gain blocks can be switched off to accommodate the total gain to the present conditions.

Instead of using separate antennae for the receiving unit and the transmitting unit another preferred embodiment of the invention suggests one common antenna for receiving and emitting the signals. Signals received from the common antenna (31) are being passed on to the transceiver (30) and subsequently processed in the processing unit (15). A local oscillator (32) controls the frequency division duplex and the signals can be transmitted and received via the same common antenna. The processed signals are finally being passed on to the transceiver (30) again and transmitted back to the terminal stations (13, 14) via the common antenna (31).

The effectiveness and performance of the system will be crucially influenced by the radiation field characteristics of the Tx and Rx antennae of the active repeater (10). In the following described special embodiment of the invention the advantages of a uniform power coverage are outlined and, because the reliability of the communication system is not only determined by the sectored radiation pattern but also the polarisation of the Tx and Rx antennae, different combinations of both will be discussed.

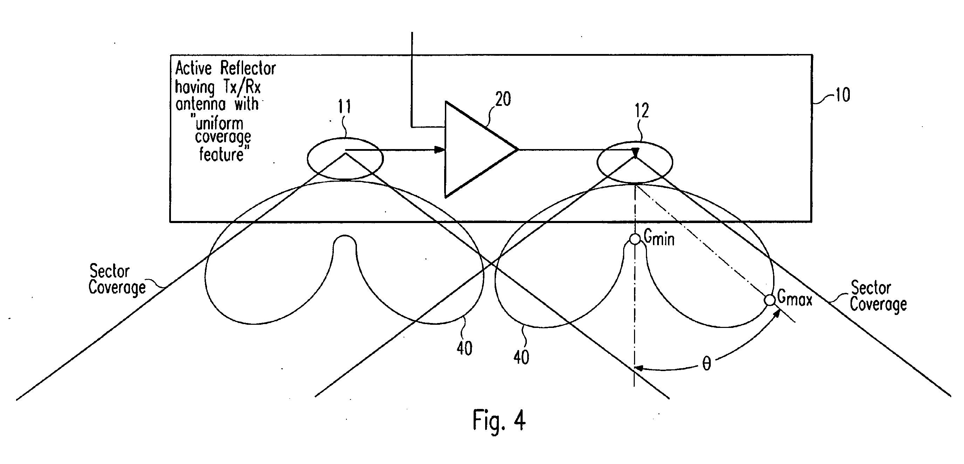

A constant flux illumination of the cell, that is the sector covered by the active repeater, implies that the elevation pattern G(θ) of the active repeater Tx and Rx antennae ideally compensate the free space attenuation as it is associated with the distance D between repeater and terminal. Figure 4 schematically shows the ideal radiation pattern of the receiving unit Rx antenna and transmitting unit Tx antenna of the reflector to provide a uniform coverage pattern, which means that all mobile terminal equipment positioned at the same height receive approximately the same signal strength. The distance between the two antennae has to be considered as negligible compared to the dimensions of the cell. Therefore, the radiation pattern of one of the antennae can be considered as the common radiation pattern for the active reflector as a whole. Ideally, if a mobile or portable terminal is a high gain antenna pointing directly to the active reflector area, the elevation gain of the ideal radiation pattern should change with equation (1).

$$G(\theta) = G(\theta_{min})\sec^2\theta = G(\theta_{min})\frac{(h_2 - h_1)^2 + R^2}{(h_2 - h_1)^2}, \qquad \theta < \theta_{max}$$

$$G(\theta) = 0, \qquad \theta > \theta_{max} \qquad\qquad (1)$$

The maximum of the radiation pattern occurs at $\theta=\theta_{max}$ and the minimum at $\theta=0$ (see Figure 4). A rough estimate of $G(\theta_{max})$ is represented in Figure 4 wherein the maximum directivity is calculated for an ideal $\sec^2\theta$ pattern as a function of $\theta_{max}$ according to equation (1). Ideally there is no radiation for the case of $\theta$ smaller than $\theta_{max}$, meaning that the repeater will not disturb the operation of a second device placed at some specific distance at the same height. In the following, solutions are given for a 60 GHz system of the proposed indoor wireless system with an active reflector. For the calculations the antenna gain at the mobile terminals is assumed to be 20 dB, which is not to large in order not to require to good pointing. The antenna gain at the active reflector is assumed to be 2 dB for the antenna of the receiver as well as for the transmitter.

In a first example the antennae of the mobile terminals have a linear polarisation characteristic and also the antennae of the active reflector show a linear polarisation characteristic. With this special constellation no specific multipath effect cancellation is won and the amplification of the gain blocks is limited due to coupling between the Rx and Tx branch of the active reflector.

In a second example the antennae of the mobile terminals have a circular polarisation characteristic with one specific rotation. The receiving and the transmitting antennae of the active reflector (if different) are also circular polarised with the same rotation. In this case signals reflected from objects or walls coming to the receiver of the same terminal or at another terminal are additionally attenuated, reducing multipath effects. Secondly, no polarisation pointing of the mobile terminal antennae to the repeater is required causing no additional losses.

In a third example the receiving antennae of the mobile terminals have a linear polarisation characteristic and the transmitting antennae of the mobile terminals have a linear polarisation characteristic orthogonal to that of the receiving antennae. The receiving antenna of the active reflector has the same polarisation as the transmitting antenna of a mobile terminal station, while the transmitting antenna of the active reflector has the same polarisation as the receiving antenna of a mobile terminal. With this example signals originating from one of the terminals and being reflected from objects or walls to any of the terminals are additionally attenuated thus reducing multipath effects.

In a fourth example the antennae of the mobile terminals show a linear polarisation characteristic, while the receiving antenna of the active reflector is operated under polarisation in one rotation direction, and the transmitting antenna of the active reflector shows a polarisation in the opposite rotation direction. With this example no polarisation pointing is required by the expense of the 3dB + 3dB losses, and if there are more active reflectors they are not disturbing each other.

TABLE 1 Basic Realistic System parameters of System Proposed at the Fig. 1

| | |
|---|---|
| Feasible Terminal Tx Power level before antenna | 10 dBm |
| Terminal Receiver Noise Figure | 10 dB |

(continued)

| Repeater Noise Figure | 7 dB |
|---|---|
| Repeater Gain Block | Ensure sufficient power at the input of the active repeater Tx antenna, considering compensation of active device noise figure. Note that theoretically there is no need to have gain control if uniform coverage types of the antennas are used. |
| Channel Bandwidth | 160 MHz |
| Implementation Margin / Non Propagation Losses | 10 dB for single carrier and 13 dB for OFDM carrier |
| Active Repeater Height | 3 m |
| Terminal (electronic equipment antenna) height | 1 m |

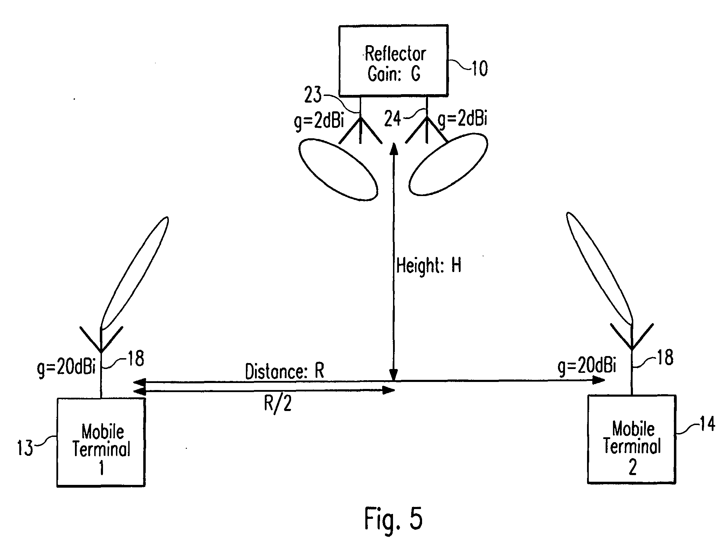

As an example for the calculation of the link budget we will compare a direct interconnection between two mobile terminals to the proposed system consisting of an active reflector in two mobile terminals (see Figure 5). The parameters for the below calculations are given in the above table 1, the unit for all distances used is supposed to be meter.

The power budget for a direct link is

$$L_D = (3+3+C\text{-}20\log(R))dB \tag{2}$$

The antennae of the mobile terminal stations used for the above equation are omni-directional with a gain of 3dBi. This is required, since for this operation high gain antennae are very cumbersome or even impossible to use if more than two mobile terminal stations are used.

For the indirect link via the active repeater we obtain

$$L_R = (20+20+2+2+2(C\text{-}10\log(R^2/4+H^2)))dB \tag{3}$$

Here, C is a constant dependent on the wavelength:

$$C = 10*\log\left(\frac{\lambda}{4\pi}\right)dB. \tag{4}$$

For a 60 GHz system C=-57dB. With this value, the complete attenuation for R=10m and H=3m in a 60 GHz system evaluates to

$$L_D = \text{-}71dB$$

$$L_R = (\text{-}101+G)dB$$

for perfect line of sight in all cases. With a reflector gain of G=30dB, which is technically possible without any problems, the proposed system with the active reflector allows for a much more secure link without sacrificing any link budget. In a direct link scenario the chance of a broken link is much higher compared to a system set-up with an active reflector.

The system processing unit (15) of the active reflector (10) may also have additionally a frequency translating unit, which changes the received signal frequency to another frequency and transmits the signals at the changed frequency to the mobile terminals. This enables a better distinction between input and output and thus avoids feedback loops in the reflector circuits. Accordingly, the transceivers of the mobile terminals receive and then transmit at the two different frequencies or channels respectively. The active reflector (10) then may also optionally be equipped with a third antenna for direct communication with a second active reflector.

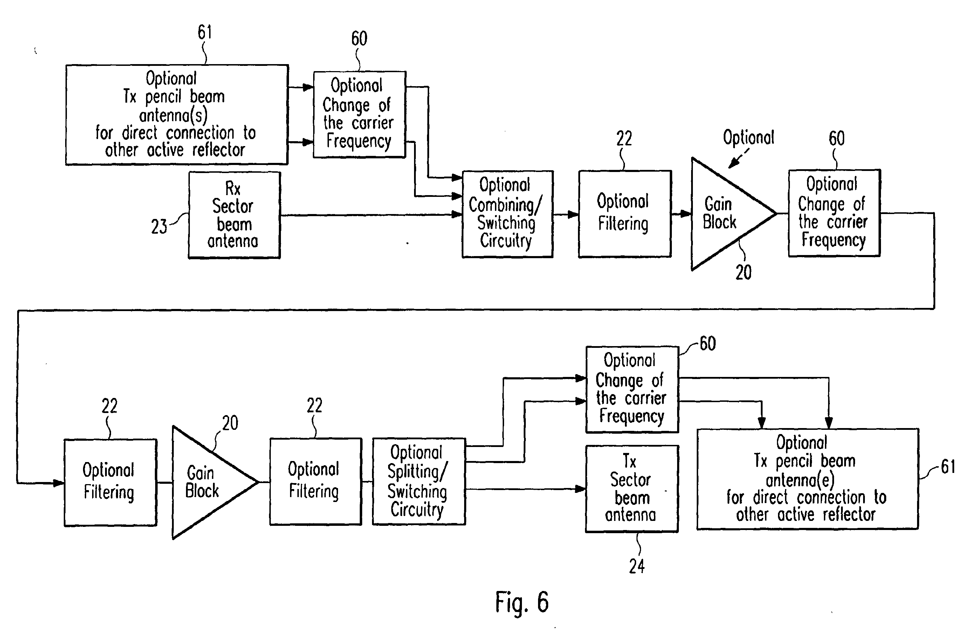

Figure 6 shows the functional blocks of an active reflector with extended functionality where additional pencil beam antennas Tx (61) allow data communication between this first and a second active reflector. Data transmitted from the second active reflector are received by the optional Tx pencil beam antenna and optionally the carrier frequency of the signal is changed (60). Consecutively these signals are being combined with the signals received from the mobile terminals within the reach of this first active reflector, then the combined signal is being processed and distributed to the mobile terminals within the reach of this first active reflector as well as being transmitted back to the second active reflector, where it will also be distributed to the mobile terminals within the reach of the second active reflector.

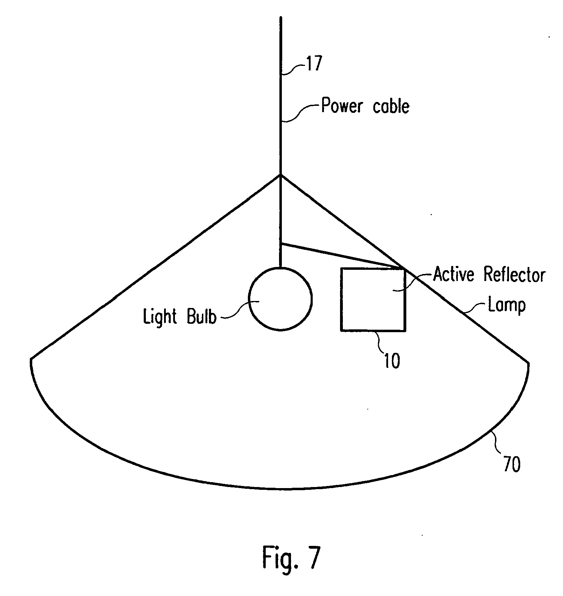

One of the advantages of the suggested solution is that no additional installation efforts are required. The active reflector can be connected to the always present power outlets (17) for the artificial lighting systems at the ceiling in offices or home environments. Due to the small physical dimensions of the device itself the repeater can easily be integrated into the usual objects used for the artificial lighting systems (70) in indoor environments as it is shown in Figure 7. Integration of the active reflector in the housing of the artificial lighting makes it invisible to the people working in the office and does not interfere with the preferences of the interior design.

To enhance the performance of the system, additional active reflectors may be placed apart from the first active reflector at the same height so that changes within the environment of the system e.g. rearranging of furniture or persons moving through the office will not cause the interruption of one of the data links.

**Claims**

1.  An active reflector (10) for use in indoor wireless data communication systems comprising receiving means (11) for receiving signals from a first mobile terminal (13) and transmitting means (12) for transmitting the received signals to a second mobile terminal (14) in an omni-directional way, so that a direct communication with high data rates between mobile terminals in an indoor environment is enabled, whereby the active reflector is adapted to be mounted above the mobile terminals in the indoor environment to ensure essentially a line of sight connection between the active reflector and each mobile terminal, whereby the active reflector (10) does not comprise a baseband processing and does not influence the logical set-up of the indoor wireless data communication system, and whereby said active reflector (10) comprises a first antenna (23) connected to the receiving means (11) and a second antenna (24) connected to the transmitting means (12), whereby the first and the second antenna are circular polarised antennae with the same polarisation direction.

2.  An active reflector according to claim 1, **characterised in that** said active reflector comprises means (15) between said receiving means and said transmitting means for processing received signals.

3.  An active reflector according to claim 2, **characterised in that** the signal processing means comprises at least one gain block (20) between the receiving means and the transmitting means.

4.  An active reflector according to claim 3, **characterised in that** the gain block comprises more than one sub-gain block (21), whereby at least one of the sub-gain blocks can be switched off.

5.  An active reflector according to one of the claims 2 to 4, **characterised by** signal filtering means (22) for filtering the received signals or the received and amplified signals.

6.  An active reflector according to one of the claims 2 to 5, **characterised in that** the means for signal processing comprises frequency translating means (60) for changing the received signal frequency to another frequency, and transmitting the signal at the changed frequency to the mobile terminals.

7.  An active reflector according to one of the claims 1 to 6, **characterised by** one common antenna (31) connected to the receiving means and the transmitting means.

8.  An active reflector according to one of the claims 1 to 7, **characterised in that** the first and the second antenna have a uniform coverage pattern (40).

9.  An active reflector according to one of the claims 1 to 8, **characterised by** means (61) for communicating data with at least one further active reflector.

**10.** An active reflector according to one of the claims 1 to 9, **characterised in that** the active reflector is adapted to be power supplied by a power outlet (17) for an indoor lamp.

**11.** An active reflector according to one of the claims 1 to 10, **characterised in that** the active reflector is adapted to be integrated into a usual lamp (70).

**12.** A wireless data communication system for direct communication between mobile terminals in an indoor environment **characterised by** at least one active reflector (10) according to one of the claims 1 to 11, and at least two mobile terminals (13, 14) with transceivers for direct wireless communication through the active reflector.

**13.** A wireless direct data communication system according to claim 12, **characterised in that** antennae are connected to the transceivers of mobile terminals (18).

**14.** A wireless direct data communication system according to claim 13, **characterised in that** the antennae of the transceivers of the mobile terminals are high gain antennae.

**15.** A wireless direct data communication system according to one of the claims 12 to 14, **characterised by** at least one further active reflector.

**16.** A wireless direct data communication system according to one of the claims 12 to 15, **characterised by** at least two active repeaters comprising antennae according to claim 12 for communicating signals from and to a first active reflector to and from a second active reflector.

**Patentansprüche**

**1.** Aktiver Reflektor (10) zum Verwenden in drahtlosen Innenraum-Kommunikationssystemen, aufweisend ein Empfängermittel (11) zum Empfangen von Signalen von einem ersten mobilen Endgerät (13) und ein Übertragungsmittel (12) zum Übertragen der empfangenen Signale zu einem zweiten mobilen Endgerät (14) auf einem Rundstrahl-Weg, so dass eine direkte Kommunikation bei hohen Datenübertragungsraten zwischen den mobilen Endgeräten in einer Innenraumumgebung ermöglicht ist, wobei der aktive Reflektor angepasst ist über den mobilen Endgeräten in der Innenraumumgebung eingebaut zu werden, um im Wesentlichen eine Sichtlinienverbindung zwischen dem aktiven Reflektor und jedem mobilen Endgerät sicherzustellen, wobei der aktive Reflektor (10) keine Basisbandverarbeitung aufweist und die logische Konfiguration des drahtlosen Innenraum-Datenkommunikationssystems nicht beeinflusst, und wobei der aktive Reflektor (10) eine erste Antenne (23) aufweist, die an das Empfängermittel (11) angeschlossen ist, und eine zweite Antenne (24), die an das Übertragungsmittel (12) angeschlossen ist, wobei erste und zweite Antenne zirkular polarisierte Antennen mit der gleichen Polarisationsrichtung sind.

**2.** Aktiver Reflektor nach Anspruch 1, **dadurch gekennzeichnet, dass** der aktive Reflektor zwischen dem Empfängermittel und dem Übertragungsmittel ein Mittel (15) zum Verarbeiten empfangener Signale aufweist.

**3.** Aktiver Reflektor nach Anspruch 2, **dadurch gekennzeichnet, dass** das Signalverarbeitungsmittel zumindest einen Verstärkerblock (20) zwischen dem Empfängermittel und dem Übertragungsmittel aufweist.

**4.** Aktiver Reflektor nach Anspruch 3, **dadurch gekennzeichnet, dass** der Verstärkerblock mehr als einen Unterverstärkerblock (21) aufweist, wobei zumindest einer der Unterverstärkerblöcke ausgeschaltet werden kann.

**5.** Aktiver Reflektor nach einem der Ansprüche 2 bis 4, **gekennzeichnet durch** ein Signalfiltermittel (22) zum Filtern der empfangenen Signale oder der empfangenen und verstärkten Signale.

**6.** Aktiver Reflektor nach einem der Ansprüche 2 bis 5, **dadurch gekennzeichnet, dass** das Mittel zum Signalverarbeiten ein Frequenzumsetzungsmittel (60) zum Ändern der empfangenen Signalfrequenz zu einer anderen Frequenz und zum Übertragen des Signals mit der geänderten Frequenz zu den mobilen Endgeräten aufweist.

**7.** Aktiver Reflektor nach einem der Ansprüche 1 bis 6, **gekennzeichnet durch** eine gemeinsame Antenne (31), die mit dem Empfängermittel und dem Übertragungsmittel verbunden ist.

**8.** Aktiver Reflektor nach einem der Ansprüche 1 bis 7, **dadurch gekennzeichnet, dass** die erste und zweite Antenne ein einheitliches Sendeabdeckungsmuster (40) haben.

9. Aktiver Reflektor nach einem der Ansprüche 1 bis 8, **gekennzeichnet durch** ein Mittel (61) zur Datenkommunikation mit zumindest einem weiteren aktiven Reflektor.

10. Aktiver Reflektor nach einem der Ansprüche 1 bis 9, **dadurch gekennzeichnet, dass** der aktive Reflektor angepasst ist durch eine Stromversorgung (17) einer Innenraumlampe mit Strom versorgt zu werden.

11. Aktiver Reflektor nach einem der Ansprüche 1 bis 10, **dadurch gekennzeichnet, dass** der aktive Reflektor angepasst ist in eine gewöhnliche Lampe (70) integriert zu werden.

12. Drahtloses Datenkommunikationssystem für eine direkte Kommunikation zwischen mobilen Endgeräten in einer Innenraumumgebung, **gekennzeichnet durch** zumindest einen aktiven Reflektor (10) nach einem der Ansprüche 1 bis 11, und zumindest zwei mobile Endgeräte (13, 14) mit Transceivern zur direkten drahtlosen Kommunikation mittels des aktiven Reflektors.

13. Drahtloses Datenkommunikationssystem nach Anspruch 12, **dadurch gekennzeichnet, dass** die Antennen mit den Transceiver der mobilen Endgeräte (18) verbunden sind.

14. Drahtloses Datenkommunikationssystem nach Anspruch 13, **dadurch gekennzeichnet, dass** die Antennen der Transceiver der mobilen Endgeräte Antennen mit einem hohem Gewinn sind.

15. Drahtloses Datenkommunikationssystem nach einem der Ansprüche 12 bis 14, **gekennzeichnet durch** zumindest einen weiteren aktiven Reflektor.

16. Drahtloses Datenkommunikationssystem nach einem der Ansprüche 12 bis 15, **gekennzeichnet durch** zumindest zwei aktive Zwischenverstärker, die Antennen nach Anspruch 12 zur Signalkommunikation von und zu einem ersten aktiven Reflektor zu und von einem zweiten aktiven Reflektor aufweisen.

## Revendications

1. Réflecteur actif (10) pour une utilisation dans des systèmes de communication de données sans fil d'intérieur comprenant un moyen de réception (11) pour recevoir des signaux en provenance d'un premier terminal mobile (13) et un moyen d'émission (12) pour émettre les signaux reçus sur un second terminal mobile (14) d'une façon omnidirectionnelle de telle sorte qu'une communication directe selon des débits de données élevés entre des terminaux mobiles dans un environnement intérieur soit autorisée, dans lequel le réflecteur actif est adapté pour être monté au-dessus des terminaux mobiles dans l'environnement intérieur afin d'assurer essentiellement une connexion en ligne de visée entre le réflecteur actif et chaque terminal mobile, dans lequel le réflecteur actif (10) ne comprend pas un traitement de bande de base et n'influence pas l'instauration logique du système de communication de données sans fil d'intérieur, dans lequel ledit réflecteur actif (10) comprend une première antenne (23) connectée au moyen de réception (11) et une seconde antenne (24) connectée au moyen d'émission (12), dans lequel les première et seconde antennes sont des antennes polarisées circulairement selon la même direction de polarisation.

2. Réflecteur actif selon la revendication 1, **caractérisé en ce que** ledit réflecteur actif comprend un moyen (15) entre ledit moyen de réception et ledit moyen d'émission pour traiter des signaux reçus.

3. Réflecteur actif selon la revendication 2, **caractérisé en ce que** le moyen de traitement de signal comprend au moins un bloc de gain (20) entre le moyen de réception et le moyen d'émission.

4. Réflecteur actif selon la revendication 3, **caractérisé en ce que** le bloc de gain comprend plus d'un sous-bloc de gain (21), dans lequel au moins l'un des sous-blocs de gain peut être coupé.

5. Réflecteur actif selon l'une des revendications 2 à 4, **caractérisé par** un moyen de filtrage de signal (22) pour filtrer les signaux reçus ou les signaux reçus et amplifiés.

6. Réflecteur actif selon l'une des revendications 2 à 5, **caractérisé en ce que** le moyen pour un traitement de signal comprend un moyen de transposition de fréquence (60) pour modifier la fréquence de signal reçu selon une autre fréquence et pour émettre le signal à la fréquence modifiée sur les terminaux mobiles.

7. Réflecteur actif selon l'une des revendications 1 à 6, **caractérisé par** une antenne commune (31) connectée au moyen de réception et au moyen d'émission.

8. Réflecteur actif selon l'une des revendications 1 à 7, **caractérisé en ce que** les première et seconde antennes présentent un motif de couverture uniforme (40).

9. Réflecteur actif selon l'une quelconque des revendications 1 à 8, **caractérisé par** un moyen (61) pour communiquer des données avec au moins un autre réflecteur actif.

10. Réflecteur actif selon l'une des revendications 1 à 9, **caractérisé en ce que** le réflecteur actif est adapté pour être alimenté par une sortie de puissance (17) pour un éclairage intérieur.

11. Réflecteur actif selon l'une des revendications 1 à 10, **caractérisé en ce que** le réflecteur actif est adapté pour être intégré dans un éclairage usuel (70).

12. Système de communication de données sans fil pour une communication directe entre des terminaux mobiles dans un environnement intérieur, **caractérisé par** au moins un réflecteur actif (10) selon l'une quelconque des revendications 1 à 11 et par au moins deux terminaux mobiles (13, 14) avec des émetteurs-récepteurs pour une communication sans fil directe par l'intermédiaire du réflecteur actif.

13. Système de communication de données directe sans fil selon la revendication 12, **caractérisé en ce que** des antennes sont connectées aux émetteurs-récepteurs de terminaux mobiles (18).

14. Système de communication de données directe sans fil selon la revendication 13, **caractérisé en ce que** les antennes des émetteurs-récepteurs des terminaux mobiles sont des antennes à gain élevé.

15. Système de communication de données directe sans fil selon l'une des revendications 12 à 14, **caractérisé par** au moins un autre réflecteur actif.

16. Système de communication de données directe sans fil selon l'une des revendications 12 à 15, **caractérisé par** au moins deux répéteurs actifs comprenant des antennes selon la revendication 12 pour communiquer des signaux depuis et sur un premier réflecteur actif et sur et depuis un second réflecteur actif.

Fig. 1

Fig. 2

## Active Reflector

Local
Oscillator ⌐32

⌐10

Signal
Processing
Unit ⌐15

Transceiver

⌐30

⌐31

Fig. 3

Active Reflector
having Tx/Rx
antenna with
"uniform
coverage
feature"

20

11

12

10

Sector
Coverage

G_min

G_max

Sector
Coverage

40

40

θ

Fig. 4

Fig. 5

Fig. 6

17

Power cable

Active Reflector

Lamp

Light Bulb

10

70

Fig. 7

**REFERENCES CITED IN THE DESCRIPTION**

**Patent documents cited in the description**

- US 5603080 A
- US 5812933 A
- US 5890055 A
- EP 0833403 A2
- WO 8906459 A